# EUROPEAN PATENT SPECIFICATION

(11) **EP 2 712 731 B1**
(45) Date of publication and mention of the grant of the patent: **07.11.2018**
(21) Application number: 13004719.4
(22) Date of filing: 30.09.2013
(51) Int. Cl.: B32B 37/12, B32B 15/08

(54) **Production line to obtain a multilayer product for sliding bearings and procedure**
Fertigungsstraße zur Herstellung eines mehrlagigen Produkts für Gleitlager und Prozedur
Ligne de production afin d'obtenir un produit multicouche pour paliers lisses et procédure

(30) Priority: 01.10.2012 IT BG20120047
(43) Date of publication of application: 02.04.2014
(73) Proprietor: Technymon Tecnology Europe SpA, 24060 Castelli Calepio (IT)
(72) Inventor: Mongodi, Raniero, 24060 Castelli Calepio (BG) (IT)
(74) Representative: Bruni, Giovanni

(56) References cited:
- EP-A2- 0 409 525
- JP-A- S63 168 333
- US-A- 3 486 961
- US-A- 3 799 832
- US-A1- 2004 093 715
- US-A1- 2008 023 130
- US-B1- 7 942 991

## Description

The present invention relates to a new production line, which by means of various in series connected tools, is able to couple layers of different materials, usually three of them, making them pass through a system of heated rolls, in rotation and opposed between each other, to obtain a multilayer final product to be used for the production of sliding bearings.

An example of known document is JP-A-S63168333 that has the purpose to prevent melt fracture, elongation, wrinkles or the like from developing by a method wherein the temperatures of heated laminating rolls are controlled within the specified temperature ranges by taking the adhesive melt temperature and film softening temperature into consideration. Another example is document EP0409525 A2 that describes Apparatus and process for fabricating pressboard from shredded paper coated with a thermoplastic material and a pair of facing webs includes placing the shredded poly-coated paper (18) between the two travelling webs (12,14) to form a composite, the composite then being passed in a manner to differentially shift the travelling webs relative to each other for enhanced bonding of the shreds to themselves and to the facing webs, by pressing them through a series of heated rollers (46-52) defining a serpentine path while heating the thermoplastic material above its softening point, and pressing the composite together.

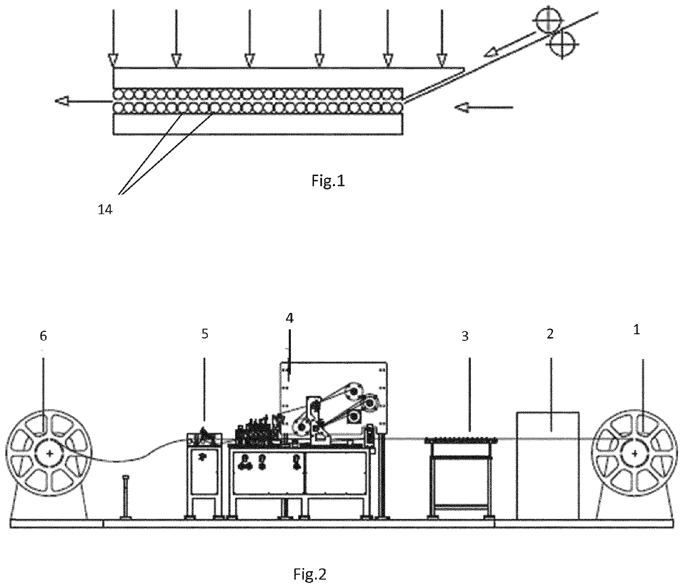

The newly designed production line is more advantageous in qualitative and quantitative terms. Said line is developed starting from an unwinding reel on which it is mounted a metal roll which is then unwound, straightened, pickled and coupled to other materials, in order to wind the final product afterwards on a winding reel again. The known production lines to obtain a multilayer product for the production of sliding bearings are disadvantageous in that they can use only a determined type of material and can obtain only a product of a determined thickness. This is due to the fact that the rolls making up the coupling device of known type (fig. 1) are opposed with respect to each other and it is absolutely not possible to move them from their own seat, therefore the coupling device is little flexible. The production line object of the present invention solves the above described technical problems allowing the use of different materials and a final multilayer product having thickness which can be modified according to the needs.

A first embodiment of the multilayer material obtained by using the present production line comprises the following materials:
- steel DC04;
- nitrilic rubber - phenolic resin (in the following simply called "glue")
- low friction coefficient material, for example PTFE laminated, charged or modified.

However, there exist other embodiments in which only the support metal changes, which can be for example aluminum, steel AISI 316, Inconnell-625, bronze etc...

These and other advantages will become clearer in the following detailed description of the invention which refers specifically to drawings 1-4 in figures 1-10, in which there is shown an absolutely not limiting embodiment of the present invention.

In particular:
Fig. 1 shows an example of the rolls coupling device according to the known art;
Fig. 2 shows a scheme of the production line, according to the invention, as a whole;
Fig. 3 shows a scheme of the braking structure;
Fig. 4 shows a scheme of the coil-holder tool;
Fig. 5 shows a scheme of the pre-gluing system;
Fig. 6 shows a scheme of the paper winding tool;
Fig. 7 shows a scheme of the degassing structure;
Fig. 8 shows a scheme of the rolls coupling device;
Fig. 9 shows a detail of the rolls structure;
Fig. 10 shows a scheme of the control station structure.

With reference to said figures, the production line object of the present invention is provided with a structure comprising various elements (fig. 2), specifically: an unwinding reel (idle) 1; a motorized straightener 2; a pickling station 3; a hot layer coupling device 4; a thickness control station 5 and a winding reel 6.

In particular, the first tool of the production line is the unwinding reel 1, which holds the steel strip wound as a roll (or other material) and which allows the same to be unwound gradually during the production. Said unwinding reel 1 is provided with a mechanical brake to avoid self-unwinding and a pressing arm to hold the strip wound during the starting steps of the production.

The second tool of the production line is the straightener 2, which straightens and flattens the strip coming from the unwinding reel 1 by means of opposed rolls to make it flat. This tool is also aimed at dragging the material with a predetermined speed without influencing the total production speed.

The third tool of the production line of the production line is the pickling station 3, studied to clean the strip surface, which is used only for some types of raw materials, as for example AISI 316, aluminum and Inconell-625. The cleaning procedure depends mainly on the quality of the material to be treated as well.

There follows the hot coupling device 4, which is the real new element of the production line, which comprises different devices described in the following.

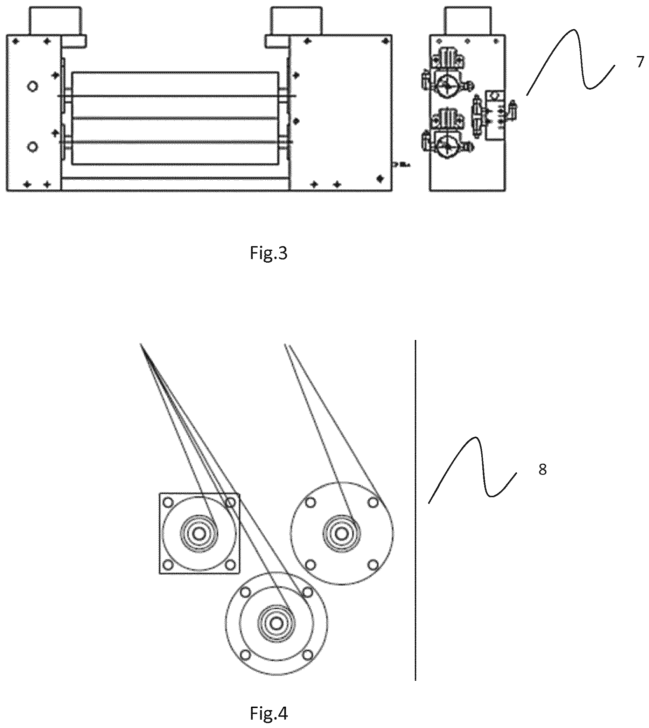

In particular, as it is shown in fig. 3, the braking device 7 allows to guide the metal strip coming from the pickling station 3.

This is realized by means of a pneumatic braking pliers (pressure adjustable) which acts directly on the rubberized rolls and adjusts the strip stretching to the rolls system inlet. A coil-holder tool 8 (fig. 4), generally three in number, serves as support for the raw materials, one for the film in low friction material, for example PTFE laminated, charged or modified, and two for the glue. The film in PTFE has to be positioned on the production line with a counterclockwise unwinding and with the portion to be glued faced downwards. The glue, instead, has to be positioned so that the waxed paper is faced downwards, so that the adhesive layer is directed to the film in PTFE. The glue is positioned along two coils since it is shorter in length with respect to the strip in PTFE, so once the first glue coil is ended, the production continues with the second coil without stopping to change it. A pre-gluing system 9 makes a side of the glue to be adhered to the film in PTFE. In order to do so, the lower roll has to be approached to the upper one by means of cranks, so that the glue layer adheres to the film in PTFE. In this step, the advancement occurs by means of the manual traction of a specialized operator, who by means of constant speed drags the first coupling to the actuation area of the thermosetting glue 11. Once this step is reached, and the coupled strip is passed (glue and PTFE) between the upper roll and the circular sector 15, the waxed paper can be detached.

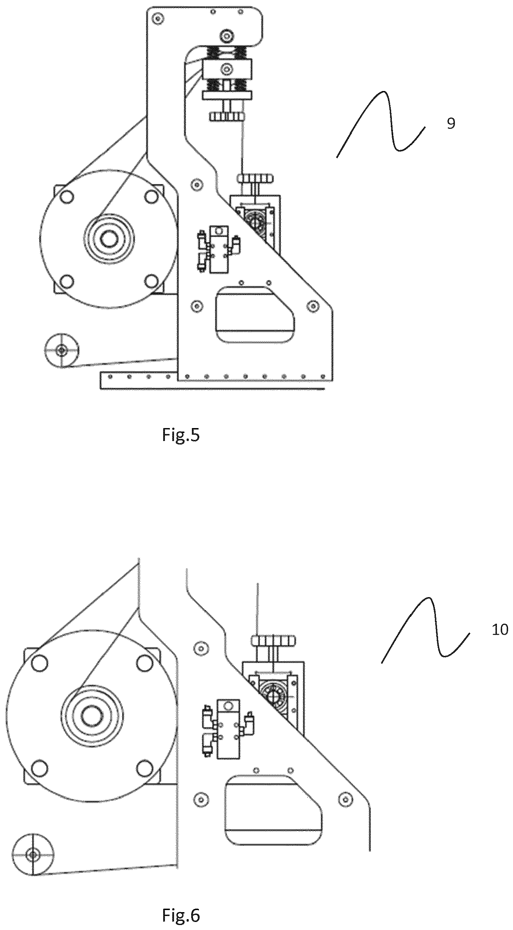

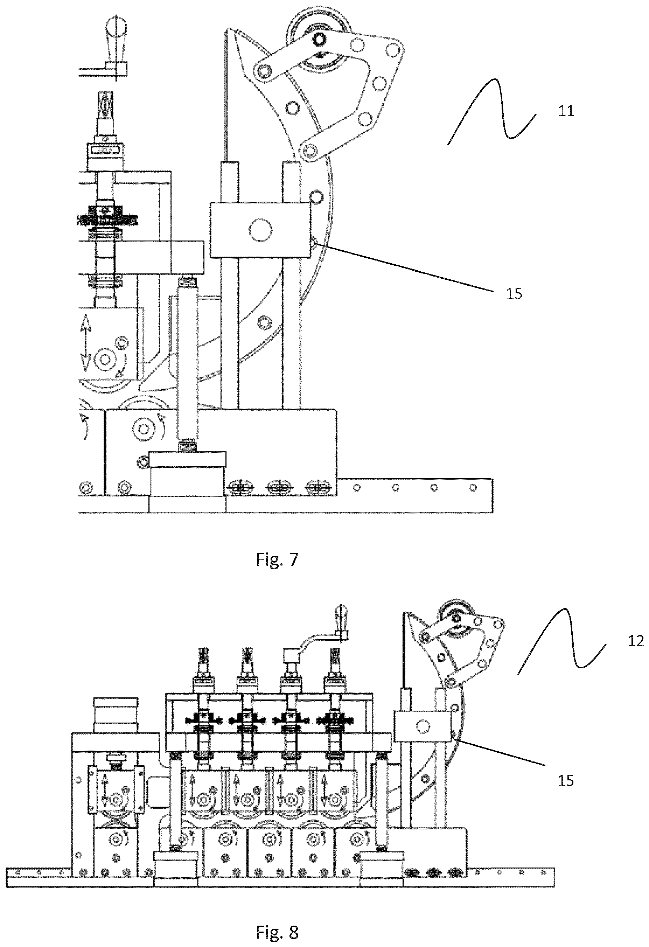

A paper winding tool 10 (fig. 6) allows then to remove the glue protection siliconed paper. In order to do so, the siliconed paper is constrained to the coil-holder supplied by air motor, the rotation speed and the consequent force are adjusted by means of the corresponding manometer. The actuation step of the thermosetting glue 11 is the most important one of the process, which serves to actuate the glue before it comes in contact to the underlying steel. The circular sector 15 (figs. 7 and 8) comprising four electric resistances which heat the surface of the multilayer product and a thermo-couple which detects the real temperature of the product. The sliding surface is treated with PTFE to favour the smoothness and to avoid that the glue adheres to the sector surface when it is moved from the film in PTFE.

The structure of the circular sector 15 can be adjusted in height, in transverse direction and it can be rotated about its own axis. A roll system 12, as it is shown in figure 8, is apt to hold a constant pressure between the two layers during passage, with very high temperatures, about 200°C. In particular, said system is formed by a plurality of upper and lower rolls (14), for example 4 or 5 respectively, arranged along two rows, one upper and one lower, so that the rolls of the upper row are not aligned to the lower ones of the lower row, i.e. they are shifted between each other (for example a roll of the upper row is positioned at the middle of the gap between two adjacent rolls of the lower row) so that the contact surfaces of the multilayer product (comprising a plurality of layers to be hot coupled 4) passing through said rolls are wider and more in number with respect to the known systems.

Moreover, the position of the upper rolls can be modified according to the thickness and/or material used. Therefore, the system is apt to house different types of materials and a number of three or more layers to be coupled.

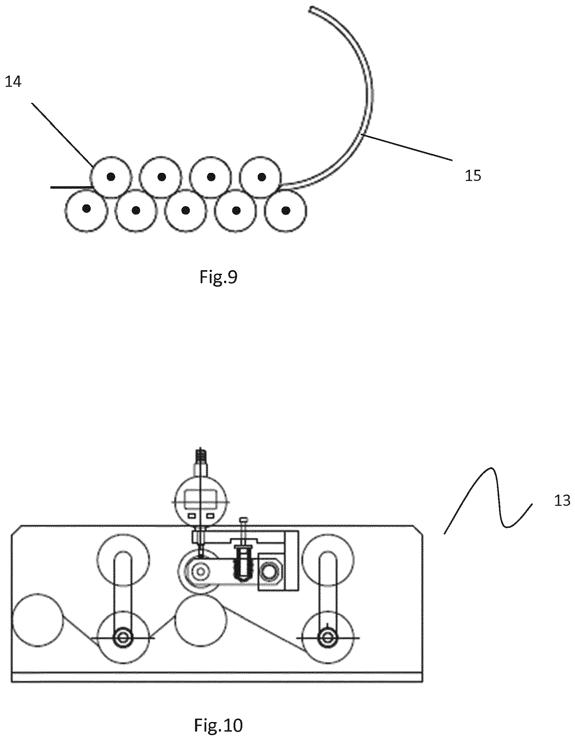

The particularity of this roll system 12, similar in the concept to a strip straightener (i.e. in other words, in order to increase the contact surface between the roller and the multilayer product there is a straight passage between said rollers, Fig.9) is to have said rolls heated from inside by means of an electric resistance and in which the real temperature is detected by 4-5 thermocouples positioned at the contact surface. Each roll is connected by means of a chain which supplies its simultaneous rotation. Said rolls rotate on self-lubricating bearings.

Finally, there is a control station 5 studied for controlling the thickness of the final product along the production line, object of the present patent, which records automatically on computers the values of each production.

The last operation in the line is represented by the winding reel 6, a tool which winds the final strip, yet coupled.

## Claims

1. Coupling device for a multilayer product comprising a plurality of layers to be hot coupled (4), the coupling device comprising a brake (7), a coil-holder tool (8), a pre-gluing system (9), a paper winding tool (10), a system for actuating the thermosetting glue (11), a roll system (12) and **characterized in that** said roll systems (12) comprises:
- a circular sector (15) comprising electric resistances which heat the surface of the multilayer product and a thermo-couple which detects the real temperature of the product,
- a plurality of upper and lower rolls (14) arranged along two rows, one upper and one lower, so that the rolls of the upper row are not aligned to the lower ones of the lower row in a way that they are shifted between each other

2. Device according to claim 1, wherein said rolls (14) comprise a thermocouple system positioned at the contact surface with said multilayer product.

3. Device according to claim 1 or 2, wherein said rolls (14) are connected between each other by means of a chain which supplies their simultaneous rotation.

4. Device according to claim 1, wherein said coil-holder tool (8) for the raw materials comprises at least three coils.

5. Device according to claim 1, wherein said pre-gluing system (9) is useful to make a side of the glue adhere to the film in low friction coefficient material.

6. Device according to claim 1, wherein said paper winding tool (10) allows the glue protection siliconed paper to be removed.

7. Device according to claim 1, wherein said actuation system of the thermosetting glue (11) allows the actuation of the glue before it comes in contact with the underlying steel.

8. Production line for realizing a multilayer product for the production of sliding bearings, comprising a first unwinding reel (1), a second winding reel (6), a motorized straightener (2), a pickling station (3), a hot layer coupling device (4), a thickness control station (5) and being **characterized in that** said hot layer coupling device (4) is realized according to any one of claims 1 to 6.

9. Procedure for hot layer coupling in a coupling device as in claims 1-8, **characterized by** the following steps:
- coupling glue and low friction coefficient material layers;
- removing siliconed paper by a paper winding tool (10) ;
- coupling to the metal layer.

10. Procedure for realizing a multilayer product for the production of sliding bearings **characterized by** the following steps:
- unwinding the metal strip;
- straightening the metal strip;
- pickling the metal strip;
- hot coupling the layers;
- thickness control;
- winding the final strip on a winding reel and being **characterized in that** said hot coupling step is realized according to the procedure described in claim 9.

## Patentansprüche

1. Kupplungsvorrichtung für ein Mehrschichtprodukt umfassend eine Mehrzahl von zu kuppelnden Schichten (4), wobei die Kupplungsvorrichtung eine Bremse (7), ein Spulenhalterwerkzeug (8), ein Vorleimsystem (9), ein Papierwicklungswerkzeug (10), ein System zum Aktivieren des wärme-härtbaren Klebstoffs (11), ein Rollensystem (12), aufweist, und ist **dadurch gekennzeichnet, dass** das besagte Rollensystem (12) umfasst:
- einen kreisförmigen Sektor (15) mit elektrischen Widerständen, die die Oberfläche des Mehrschichtprodukts erwärmen, und einem Thermoelement, das die tatsächliche Temperatur des Produkts erfasst,
- eine Mehrzahl von oberen und unteren Rollen (14), die entlang zwei Reihen, einer oberen und einer unteren, derart angeordnet sind, dass die Rollen der oberen Reihe nicht mit denen der unteren Reihe ausgerichtet sind, derart, dass sie relativ zueinander versetzt sind.

2. Vorrichtung nach Anspruch 1, wobei die besagten Rollen (14) ein Thermoelementsystem umfassen, das auf der Kontaktfläche mit dem Mehrschichtprodukt positioniert ist.

3. Vorrichtung nach Anspruch 1 oder 2, wobei die besagten Rollen (14) miteinander durch eine Kette verbunden sind, die ihre gleichzeitige Drehung bewirkt.

4. Vorrichtung nach Anspruch 1, wobei das Spulenhalterwerkzeug (8) für die Rohmaterialien mindestens drei Spulen aufweist.

5. Vorrichtung nach Anspruch 1, wobei das besagte vorläufige Klebesystem (9) zum Kleben einer Seite des Klebers auf den Film in einem Material mit einem niedrigen Reibungskoeffizienten, geeignet ist.

6. Vorrichtung nach Anspruch 1, wobei das Papierwicklungswerkzeug (10) das Entfernen des Silikonkleberschutzpapiers ermöglicht.

7. Vorrichtung nach Anspruch 1, wobei das besagte Aktivierungssystem des wärme-härtbaren Klebstoffs (11) ermöglicht, dass der Klebstoff aktiviert wird, bevor er in Kontakt mit dem darunter liegenden Stahl kommt.

8. Produktionslinie zur Herstellung eines Mehrschichtprodukts zur Herstellung von Gleitlagern, mit einer ersten Abwicklungsspule (1), einer zweiten Wicklungsspule (6), einer motorisierten Richtvorrichtung (2), einer Pick-up-Station (3), eine Kupplungsvorrichtung (4) einer heißen Schicht, eine Dickenkontrollstation (5), und **dadurch gekennzeichnet, dass** die Kupplungsvorrichtung (4) der heißen Schicht gemäß einem der Ansprüche 1 bis 6 hergestellt ist.

9. Verfahren zur Ankopplung einer heißen Schicht in einer Kupplungsvorrichtung nach den Ansprüchen 1-8, **gekennzeichnet durch** folgende Schritte:
- Kopplung des Klebstoffs mit den Schichten des Materials mit dem niedrigen Reibungskoeffizienten;
- Entfernung eines Silikonpapiers in einem Papierwicklungswerkzeug (10);
- Kopplung an die Metallschicht.

10. Verfahren zur Herstellung eines Mehrschichtprodukts zur Herstellung von Gleitlagern, **gekennzeichnet durch** folgende Schritte:
- Abwicklung des Metallstreifens;
- Richtung des Metallstreifens;
- Entfernung des Metallstreifens;
- Heiße Kopplung der Schichten;
- Kontrolle der Dicke;
- Wicklung des letzten Streifens auf einer Wickelspule **dadurch gekennzeichnet, dass** der besagte Heißkupplungsschritt gemäß dem in Anspruch 9 beschriebenen Verfahren ausgeführt wird.

## Revendications

1. Dispositif de couplage d'un produit multicouche comprenant une pluralité de couches à coupler à chaud (4), le dispositif de couplage comprenant un frein (7), un outil porte-bobine (8), un système de collage préliminaire (9), un outil d'emballage de papier (10), un système pour activer la colle thermodurcissable (11), un système de rouleau (12) et **caractérisé en ce que** ledit système de rouleau (12) comprend:
- un secteur circulaire (15) comprenant des résistances électriques qui chauffent la surface du produit multicouche et un thermocouple qui détecte la température réelle du produit,
- une pluralité de rouleaux supérieurs et inférieurs (14) disposés le long de deux rangées, une supérieure et une inférieure, de sorte que les rouleaux de la rangée supérieure ne sont pas alignés avec ceux de la rangée inférieure, de sorte qu'ils soient décalés l'un par rapport à l'autre.

2. Dispositif selon la revendication 1, dans lequel lesdits rouleaux (14) comprennent un système de thermocouple positionné sur la surface de contact avec ledit produit multicouche.

3. Dispositif selon la revendication 1 ou 2, dans lequel lesdits rouleaux (14) sont reliés l'un à l'autre au moyen d'une chaîne qui provoque leur rotation simultanée.

4. Dispositif selon la revendication 1, dans lequel ledit outil porte-bobine (8) pour les matières premières comprend au moins trois bobines.

5. Dispositif selon la revendication 1, dans lequel ledit système de collage préliminaire (9) est utile pour faire adhérer une face de la colle au film dans un matériau à faible coefficient de frottement.

6. Dispositif selon la revendication 1, dans lequel ledit outil d'emballage de papier (10) permet de retirer le papier siliconé de protection de colle.

7. Dispositif selon la revendication 1, dans lequel ledit système d'activation de la colle thermodurcissable (11) permet d'activer la colle avant qu'elle entre en contact avec l'acier sous-jacent.

8. Ligne de production pour réaliser un produit multicouche pour la fabrication de paliers lisses, comprenant un premier rouleau de déroulement (1), une deuxième bobine d'enroulement (6), un dispositif de redressement motorisé (2), un poste de ramassage (3), un dispositif de couplage (4) d'une couche chaude, un poste de contrôle d'épaisseur (5), **caractérisé en ce que** ledit dispositif de couplage (4) d'une couche chaude est réalisé selon l'une quelconque des revendications 1 à 6.

9. Procédé de couplage d'une couche chaude dans un dispositif de couplage selon les revendications 1 à 8, **caractérisé par** les opérations suivantes:
- couplage d'une colle avec des couches de matériau à faible coefficient de frottement;
- retirement d'un papier siliconé dans un outil d'emballage de papier (10);
- couplage à la couche métallique.

10. Procédé pour réaliser un produit multicouche pour la production de paliers lisses, **caractérisé par** les opérations suivantes:
- déroulement de la bande métallique;
- redressement de la bande métallique;
- enlèvement de la bande métallique;
- couplage à chaud des couches;
- contrôle de l'épaisseur;
- enroulement de la bande finale sur une bobine, **caractérisé en ce que** ladite opération de couplage à chaud est effectuée selon le procédé décrit dans la revendication 9.
